# EUROPEAN PATENT APPLICATION

(11) **EP 3 366 510 A1**
(43) Date of publication of application: **29.08.2018**
(21) Application number: 18157819.6
(22) Date of filing: 21.02.2018
(51) Int. Cl.: B60N 2/58, B64D 11/06

(54) **SEAT PART COMPRISING A SEAT COVER**

(30) Priority: 22.02.2017 GB 201702823
(71) Applicant: Acro Aircraft Seating Limited, Crawley, West Sussex RH11 0PR (GB)
(72) Inventor: HODGKINSON, Alex, Crawley, West Sussex RH11 0PR (GB)
(74) Representative: Sweetinburgh, Mark Roger

(57) **Abstract**

Described herein is a seat part for a vehicle seat comprising a body and a cover for the body. The seat part comprises one or more securing means for securing part of the cover to the seat part, the seat part comprises one or more channels, and the cover comprises one or more insertion elements for insertion into the one or more channels. The one or more insertion elements are moulded to the shape of the body such that when the one or more insertion elements are inserted into the one or more channels and a part of the cover is secured by the securing means to the seat part, removal of the cover from the body is substantially prevented. Also described herein is a seat and a row of seats comprising the seat part.

## Description

The present invention relates to a seat part, for example a seat back, comprising a cover, in particular to an aircraft seat back with a flexible seat cover.

During maintenance of aircraft seats, it is often desirable to remove the seat covers. This can, for example, be to replace the covers in the event of damage, or to replace cushioning within the aircraft seat. Whilst various methods are known for attachment of seat covers, removal thereof is often time consuming and cumbersome.

For example, it is often the case that other parts of the seat must be removed first in order to remove the seat covers. When a large number of covers are being replaced, this can take a considerable amount of time.

It is, therefore, an object of the present invention to seek to alleviate the above identified problems.

### SUMMARY OF THE INVENTION

According to one aspect of the present invention, there is provided a seat part for a vehicle seat comprising a body and a cover for the body, wherein
(i) the seat part comprises one or more securing means for securing part of the cover to the seat part;
(ii) the seat part comprises one or more channels; and
(iii) the cover comprises one or more insertion elements for insertion into the one or more channels,
wherein the one or more insertion elements are moulded to the shape of the body such that when the one or more insertion elements are inserted into the one or more channels and a part of the cover is secured by the securing means to the seat part, removal of the cover from the body is substantially prevented.

When the insertion elements are inserted into the channel and the cover is secured to the seat part via the securing means, removal of the insertion elements from the channel is prevented. As a result, the present invention provides a remarkably quick and easy way to install and remove a cover from a seat part by simply unfastening the securing means. This greatly reduces maintenance times and provides a significant advantage over existing aircraft seats.

Preferably, the seat part is a seat back.

Preferably, the seat part is an aircraft seat part, preferably an aircraft seat back.

Preferably, the one or more channels are positioned along at least two sides of the seat part, preferably along at least three sides of the seat part.

Preferably, the one or more channels are positioned along at least a part of one or more sides, preferably two sides, of the seat part.

Preferably, the one or more channels are positioned along at least a part of the top of the seat part.

Preferably, the one or more channels are formed in the body. As such the one or more channels can be formed integrally within the body of the seat.

Preferably, the one or more channels are positioned along an edge of the body, preferably a rear edge of the body.

Preferably, the one or more channels are positioned along one or both rear side edges of the body.

Preferably, the one or more channels are positioned along a rear top edge of the body.

Preferably, the seat part comprises a channel positioned along at least about 40% to about 70% of the length of one or more of said sides, preferably along at least about 50% to about 70% of the length of one or more of said sides.

Preferably, the seat part comprises a channel positioned along at least about 60% of the length of one or more of said sides.

Preferably, the seat part comprises a channel positioned along at least about the upper 40% to 70% of one or more of said sides, preferably, about the upper 50% to 70% of one or more of said sides.

Preferably, the seat part comprises a channel positioned along at least about the upper 60% of one or more of said sides.

Preferably, the one or more channels comprise a channel positioned along at least a part of a first side of the seat part, along the top of the seat part and along at least a part of a second side of the seat part.

Preferably, the one or more channels comprise a channel positioned along at least a part of the upper about 40% to about 70% of a first side of the seat part, along the top of the seat part and along at least a part of the upper about 40% to about 70% of a second side of the seat part.

Preferably, the first side of the seat part is opposite the second side of the seat part.

Preferably, the one or more channels are formed between the body of the seat part and a seat attachment secured to the body.

Preferably, the seat attachment is a seat back attachment.

Preferably, the seat attachment is rigid.

Preferably, the seat attachment is secured to an upper part of the body.

Preferably, the seat attachment is secured to an upper half of the seat back.

Preferably, the seat part is a seat back and the seat attachment is a rigid seat back attachment, for example a shroud, secured to the rear of the seat back.

As will be appreciated, various seat back attachments, commonly referred to as seat back "shrouds", are known to be provided on the back of aircraft seats. Such shrouds are often in the form of a plastic moulding and provide the seat back with a clean, aesthetically pleasing appearance. They may be provided over all of the seat back or just a part of the seat back, for example an upper part of the seat back.

Preferably, the body is a seat back body.

Preferably, the one or more securing means are for securing part of the cover to the body.

Preferably, the one or more securing means are for securing part of the cover to one or more sides of the body.

Preferably, the one or more securing means are for securing the cover to the seat part, preferably the body, at or near one or more ends of one or more of the channels.

Preferably, the seat part comprises two or more securing means for securing part of the cover to the body at first and second fixing positions, wherein the first and second fixing positions are positioned at or near the ends of one or more of the one or more channels.

Preferably, the seat part comprises two or more securing means for securing part of the cover to the body at first and second fixing positions, wherein the one or more channels are positioned between said first and second fixing positions.

Preferably, the first fixing position is on a first side of the seat part and the second fixing position is on a second side of the seat part.

Preferably, the first fixing position is on a first side of the seat part, the second fixing position is on a second side of the seat part, the one or more channels are positioned along at least a part of the first side of the seat part, along the top of the seat back and along at least a part of the second side of the seat part, wherein the first and second fixing positions are located at or near each end of the one or more channels.

Preferably, the first and second fixing positions are located between the front face of the body and the one or more channels. As such, it is preferred that the first and second fixing positions are located forward of the one or more channels.

Preferably, the one or more securing means are located between the front face of the cover and the one or more insertion elements. As such, it is preferred that the one or more securing means are located forward of the one or more insertion elements.

It will be appreciated that reference to "forward" is with reference to the forward facing orientation of a passenger sitting within the seat. As such, the front face of the seat part is positioned forward of the rear face of the seat part.

Preferably, one or more of the securing means comprise Velcro (RTM), or one or more poppers.

Preferably, one or more of the securing means comprise a first mating part on the body and a second mating part on the cover.

Preferably, one or more of the securing means comprise a first mating part on the seat attachment and a second mating part on the cover.

Preferably, the cover is a front cover.

Preferably, the cover is flexible.

Preferably, the one or more insertion elements comprise one or more side insertion elements for insertion into one or more channels positioned along a side of the seat part.

Preferably, the one or more insertion elements comprise a first side insertion element for insertion into a channel along a first side of the seat part and a second side insertion element for insertion into a channel along a second side of the seat part.

Preferably, the one or more insertion elements comprise one or more top insertion elements for insertion into a channel in the top of the seat part.

Preferably, the cover comprises two or more securing means for securing part of the cover to the body at first and second fixing positions, wherein the one or more top insertion elements are positioned between said securing means.

Preferably, one or more of the one or more insertion elements comprise one or more protrusions for abutment with the body of the seat, preferably a forward facing surface of the seat.

Preferably, the one or more top insertion elements comprise one or more protrusions for abutment with the body of the seat, preferably a forward facing surface of the body.

Preferably, the one or more protrusions are provided on an inner surface of the one or more insertion elements.

It will be appreciated that reference to "inner surface" is with reference to the surface of the insertion element in contact with the body of the seat.

Preferably, one or more of the one or more insertion elements comprise one or more indentations, preferably on an outer surface, preferably a forward facing surface of the one or more insertion elements.

It will be appreciated that reference to "outer surface" is with reference to the surface of the insertion element not in contact with the body of the seat.

Preferably, the one or more protrusions are provided on a first surface of an insertion element and the one or more indentations are provided on a second surface of the insertion element.

Preferably, the one or more protrusions are provided on an inner surface of an insertion element and the one or more indentations are provided on an outer surface of the insertion element.

Preferably, the body comprises one or more projections for resisting removal of the one or more insertion elements from the body.

Preferably, the body comprises one or more projections for resisting sliding of the one or more protrusions off an edge of the body when said one or more protrusions are in abutment with said body.

Preferably, the one or more projections are provided on a forward facing surface of the body.

Preferably, the one or more projections comprise one or more ridges, preferably on a forward facing surface of the body, preferably at or near the outer edge of said forward facing surface.

Preferably, the cover comprises multiple insertion elements and a gap or joint is provided between adjacent insertion elements.

Preferably, a gap or joint is provided at or near one or more corners of the seat part.

Preferably, the cover comprises first side and second side insertion elements and a top insertion element, wherein a gap or joint is provided between the first side and top insertion elements and between the second side and top insertion elements.

Preferably, one or more of the one or more insertion elements are rigid insertion elements for insertion into the one or more channels.

Preferably, one or more of the one or more insertion elements are shaped to be placed against and to bend around an edge of the body, preferably a rear edge of the body.

Preferably, one or more of the one or more insertion elements are elongate insertion members, for example elongate bars, for positioning along an edge of the body, preferably a rear edge of the body.

Preferably, one or more of the insertion elements are shaped for positioning around a corner of the body, for example a top corner of the body.

Preferably, the cover comprises a top insertion element moulded to the shape of the edge, preferably the rear edge, of the body along the top of the body and to the shape of one or both of the upper corners of the body, preferably the rear edge of one or both of the upper corners of the body.

Preferably, the one or more insertion elements are an insertion element unit comprising two or more insertion elements, preferably three insertion elements.

Preferably, the insertion elements are integrally formed.

Preferably, the insertion elements are separated by a joint.

Preferably, adjacent insertion elements abut eachother.

Preferably, one or more of the one or more insertion elements comprise a substantially L-shaped or U-shaped cross section.

Preferably, removal of the cover from the body is prevented.

Preferably, the body is a seat back body.

According to another aspect of the present invention, there is provided a cover for a seat part, the cover comprising:-
(a) one or more securing means for securing part of the cover to the seat part; and
(b) one or more insertion elements for insertion into one or more channels of the seat part,
wherein the one or more insertion elements are moulded to the shape of the body such that when the one or more insertion elements are inserted into the one or more channels and a part of the cover is secured by the securing means to the seat part, removal of the cover from the body is substantially prevented.

Preferably, the seat part is a seat part according to the present invention.

In a particularly preferred aspect of the present invention, there is provided a seat back for a vehicle seat comprising a body and a cover for the body, wherein
(i) the seat back comprises one or more securing means for securing part of the cover to the seat back;
(ii) the seat back comprises one or more channels positioned along at least a part of the top of the seat back; and
(iii) the cover comprises one or more elongate insertion elements for insertion into the one or more channels,
wherein the one or more insertion elements are moulded to the shape of the body such that when the one or more insertion elements are inserted into the one or more channels and a part of the cover is secured by the securing means to the seat back, removal of the cover from the body is substantially prevented,
wherein the one or more insertion elements comprise one or more top insertion elements for insertion into a channel in the top of the seat back,
wherein the seat back comprises two or more securing means for securing part of the cover to the body at first and second fixing positions, wherein the one or more channels are positioned between said first and second fixing positions,
wherein the first fixing position is on a first side of the seat back and the second fixing position is on a second side of the seat back.

According to another aspect of the present invention, there is provided a seat comprising a seat part according to the present invention.

Preferably, the seat is an aircraft seat.

According to another aspect of the present invention, there is provided a row of seats according to the present invention.

It will be appreciated that reference to "one or more" includes reference to "a plurality".

Within this specification, the term "about" means plus or minus 20%, more preferably plus or minus 10%, even more preferably plus or minus 5%, most preferably plus or minus 2%.

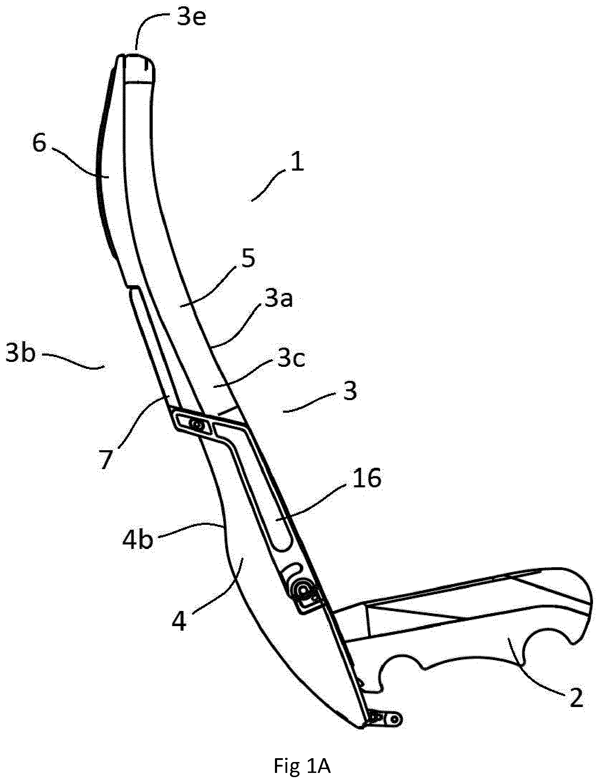

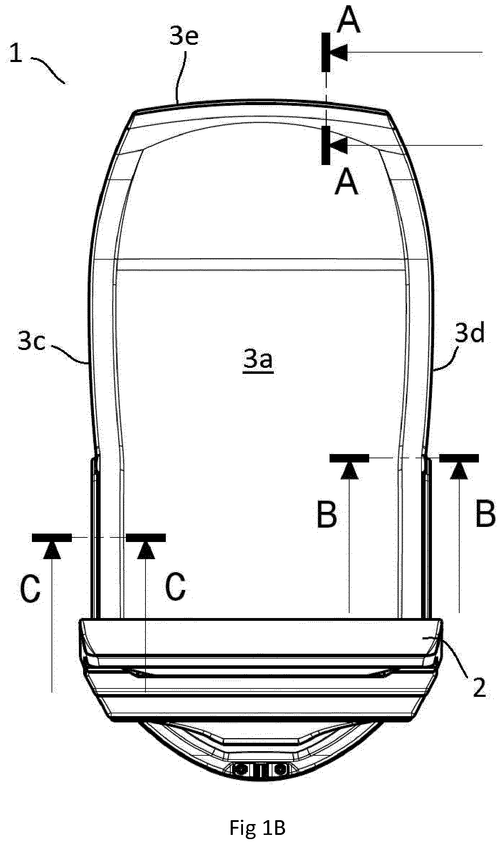

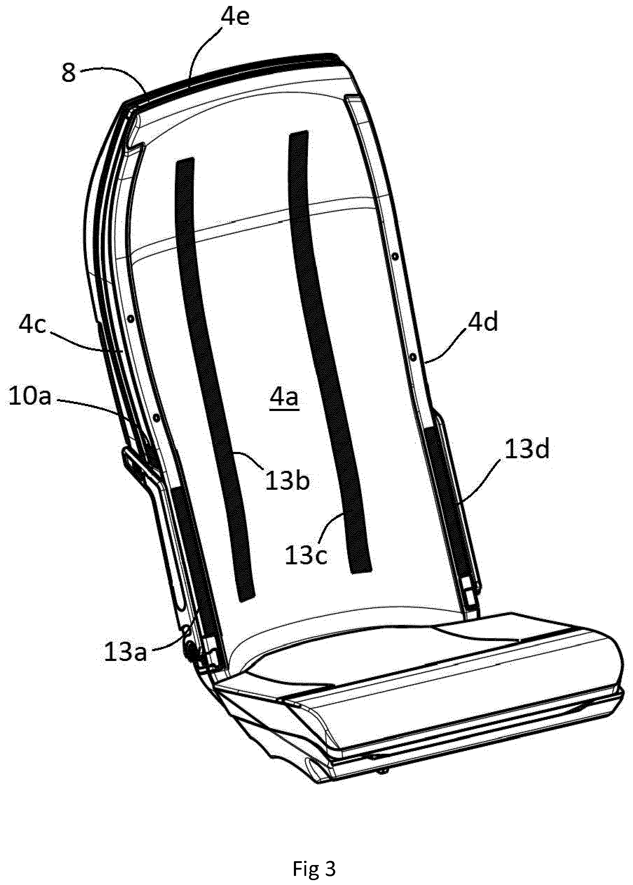

Within this specification, it will be appreciated that a "side" of a seat part borders the front and rear faces of a seat part. This is shown with particular reference to Figures 1A, 1B and 3 in relation to a seat back. As will be appreciated, the front face of a seat back is the face against which the back of a passenger rests and the rear face of a seat back is that facing a passenger sitting in a seat behind the seat back. The top of a seat back joins the sides of the seat back. As such, the front and rear faces of the seat back are bordered by the sides and top of the seat back.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

Example embodiments of the present invention will now be described with reference to the accompanying figures, in which
Figures 1A and 1B show side and front views of an aircraft seat comprising a seat back of the present invention;
Figures 2A to 2C show enlarged cross-sectional views through A-A (Figure 2A), B-B (Figure 2B) and C-C (Figure 2C) of Figure 1B;
Figure 3 shows a body of a seat back of the present invention without the cover attached;
Figure 4A shows insertion elements for use in the present invention;
Figure 4B shows Velcro (RTM) patches for securing a cover to the seat back;
Figure 4C shows a seat cover of the present invention;
Figure 4D shows alternative insertion elements for use in the present invention;
Figure 5A shows an alternative arrangement of insertion elements in which only a top insertion element is provided;
Figure 5B shows the insertion element of the arrangement shown in Figure 5A attached to the top of an aircraft seat body;
Figure 5C shows a cross-sectional view through Figure 5B including through an indentation on the insertion element; and
Figure 5D shows a cross-sectional view between indentations of the insertion element additionally showing the position of a shroud attached to the rear of the aircraft seat body.

The present invention relates to a seat part, for example a seat back, of a vehicle seat, for example an aircraft seat.

With reference to Figure 1A, a vehicle seat 1 comprises a seat base 2 and a seat back 3. The seat back 3 includes a body 4, a cover 5 and a seat back attachment 6 in the form of a seat back shroud. In the example shown, a tray table 7 is stored in a stowed position against the shroud 6. The tray table 7 is supported by table legs 16.

The seat back 3 has a front face 3a, rear face 3b, sides 3c, 3d and a top 3e. Likewise, with reference to Figures 1A and 3, the body 4 has a front face 4a, rear face 4b, sides 4c, 4d and a top 4e.

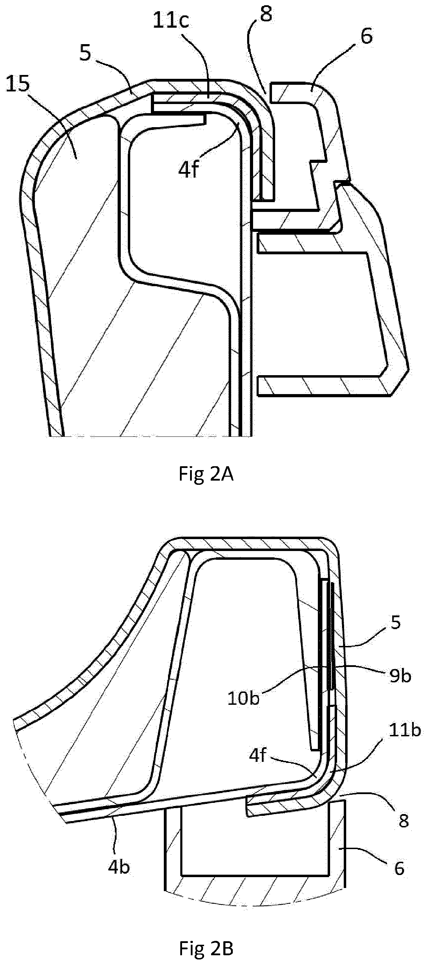

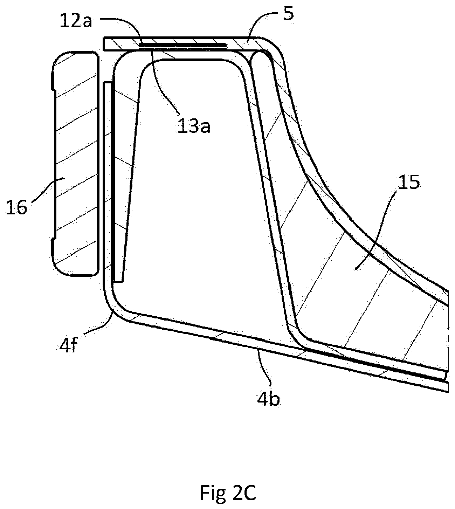

With reference to Figures 2A, 2B, 3 and 4B a channel 8 is provided between the shroud 6 and the rear edge 4f of the body 4. The body is provided with a deformable material 15 for cushioning the back of a passenger. The channel 8 is positioned along an upper part of the sides 3c, 3d and along the top 3e of the seat back 3 between securing means 9a, 9b for securing the cover 5 to the body 4 at first 10a and second 10b fixing positions on the body 4. In the example shown, the securing means 9a and 9b are Velcro (hook and loop fastener) pads for mating with corresponding Velcro pads 10a, 10b on the body 4. As such, the Velcro pads 10a, 10b represent the first 10a and second 10b fixing positions on the body 4.

In the example shown, the fixing positions 10a and 10b are on the sides 4c, 4d of the body 4 in front of the channel 8. As such, the fixing positions are at the end of the channel 8. However, it will be appreciated that the fixing positions could be provided lower than each end of the channel 8, such that the channel is provided between the fixing positions 10a, 10b.

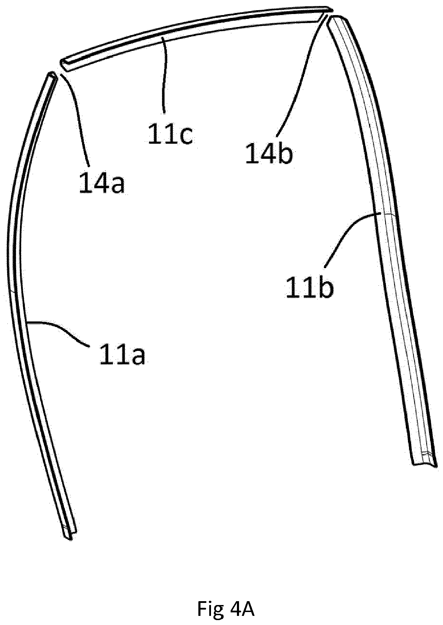

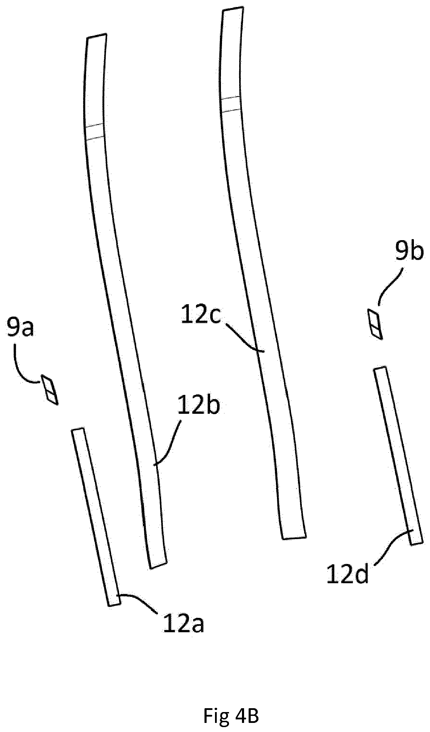

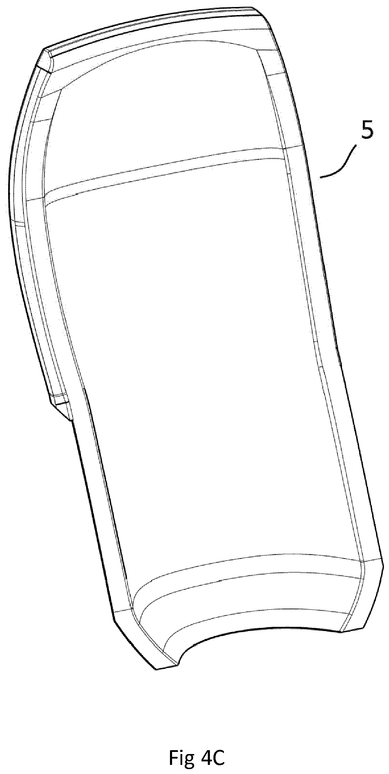

With reference to Figure 4A, the cover 5 comprises insertion elements 11a, 11b, 11c. Each insertion element 11a, 11b, 11c is an elongate bar which is moulded to the shape of the rear edge 4f of the body 4. Insertion elements 11a, 11b are inserted into the channel 8 at the sides 3c, 3d of the seat back. Insertion element 11c is inserted into the channel 8 at the top 3e of the seat back. The insertion elements 11a, 11b are moulded to the shape of the rear edge 4f along each side 4c, 4d of the body 3. Insertion element 11c is moulded to the shape of the rear edge 4f along the top 4e of the body.

When the insertion elements 11a, 11b, 11c are inserted into the channel 8 and the cover 5 is secured to the body 4 via the securing means 9a, 9b, removal of the insertion elements 11a, 11b, 11c from the channel 8 is prevented. In particular, the arrangement of insertion elements, channel and securing means locks the cover 5 into engagement with the body 4.

As a result, the present invention provides a remarkably quick and easy way to install and remove a cover from a seat back by simply unfastening the two securing means 9a, 9b. This greatly reduces maintenance times and provides a significant advantage over existing aircraft seats.

It will also be seen that the provision of separate insertion elements 11a, 11b, 11c means that gaps 14a, 14b are created at the upper corners of the seat back. This is particularly advantageous because it means that excess material of the seat cover 4, created during folding of the seat cover material at the corners, can be inserted into the gaps 14a, 14b. This not only provides a more aesthetically pleasing appearance, but reduces any bulging of material at the corners which can be particularly prone to wear and tear. The presence of the gaps 14a, 14b also makes installation of the seat cover 5 against the body 4 much easier because; without such a gap it would be difficult to insert the folded corner of the seat cover into the channel 8.

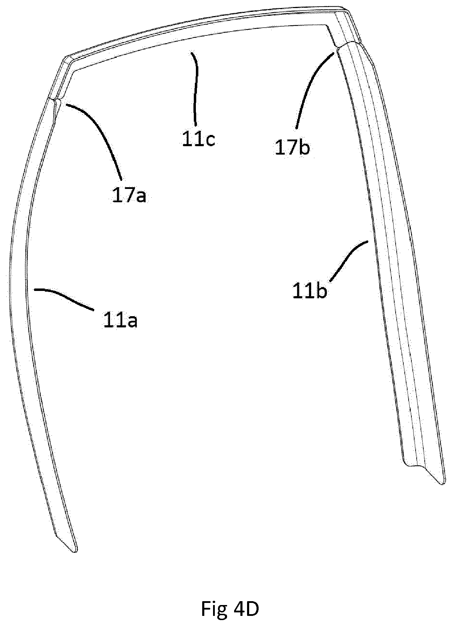

With reference to Figure 4D, alternative insertion elements 11a, 11b and 11c are shown.

As with the insertion elements shown in Figure 4A, each insertion element 11a, 11b, 11c of Figure 4D is an elongate bar which is moulded to the shape of the rear edge 4f of the body 4. Insertion elements 11a, 11b are inserted into the channel 8 at the sides 3c, 3d of the seat back.

Insertion element 11c is moulded to the shape of the rear edge 4f along the top 4e of the seat back and to the shape of the upper corners of the seat back such that it can be positioned along the top edge 4f, around each top corner and partway down each side 3c, 3d of the seat back.

Insertion element 11c can then be inserted into the channel 8 at the top 3e of the seat back and into an upper region of the channel 8 at the sides 3c, 3d of the seat back.

This is particularly advantageous because it makes it more difficult to remove insertion element 11c via forward movement thereof. In addition, by moulding insertion element 11c to follow the contour of the rear corners of the seat back, in essence by providing bends at each end of insertion element 11c, this increases the strength of insertion element 11c. This also increases the overall ability of the insertion elements 11a, 11b and 11c to prevent removal of the seat cover from the seat part when the cover is secured to the seat part by the securing means 9a, 9b.

As with the example shown in Figure 4A, the insertion elements 11a, 11b of Figure 4D are moulded to the shape of the rear edge 4f along each side 4c, 4d of the body 3.

Whilst there are no gaps 14a, 14b provided between the insertion elements 11a, 11b and 11c of Figure 4D, it will be appreciated that this is an option. In place of gaps 14a, 14b, joints 17a, 17b are provided between adjacent insertion elements 11a, 11b, 11c. The joints allow the insertion elements 11a, 11b, 11c to hinge and flex without stressing the plastic material. This is also an advantage of the gaps 14a, 14b in the example shown in Figure 4A. It will be appreciated that adjacent insertion elements 11a, 11b, 11c could simply abut each other to form the joints 17a, 17b, or that adjacent insertion elements 11a, 11b, 11c could be integrally formed with a thinner, joining strip, of insertion element material, for example plastic, positioned therebetween to allow adjacent insertion elements to hinge and flex. Accordingly, in one embodiment, insertion elements 11a, 11b and 11c are formed as a single insertion element unit comprising integrally formed insertion elements 11a, 11b, 11c.

As will be further seen in Figure 4D, insertion elements 11a and 11b are wider that insertion element 11c, i.e. they protrude further forward, such that they can abut the sides 4c, 4d of the seat part. Conveniently, the forward facing edge of insertion elements 11a and 11b of Figure 4D is chamfered at its upper end.

Whilst not necessary for locking the cover 5 into engagement with the body 4, additional Velcro strips 12a, 12b, 12c, 12d can be provided on the cover 5 for mating with corresponding Velcro strips 13a, 13b, 13c, 13d on the body 4. The additional Velcro strips help to secure the cover 5 against the body 4.

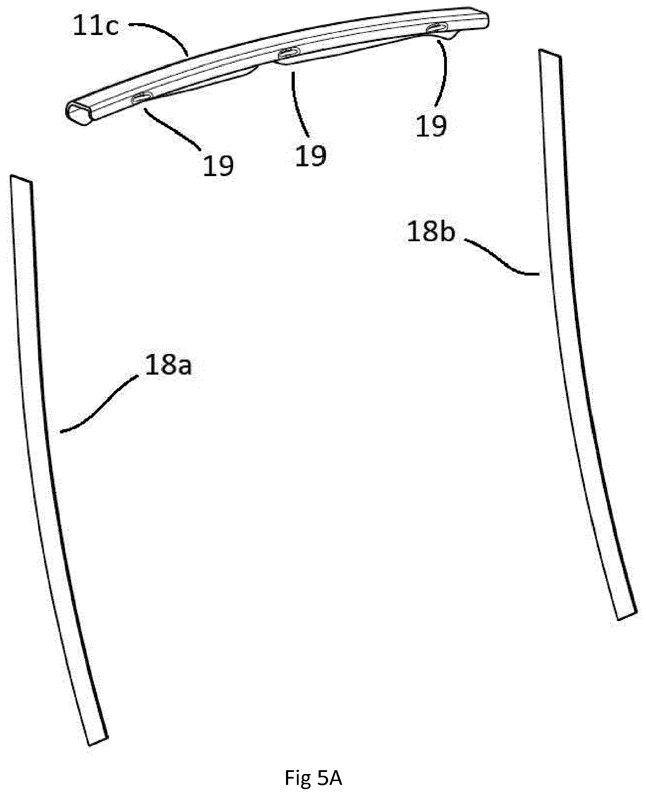

With reference to Figures 5A to 5D, in an alternative arrangement of insertion elements, the side insertion elements 11a, 11b are replaced with Velcro strips 18a, 18b for mating with corresponding Velcro strips on the body (not shown). In this example, only a single top insertion element 11c is required.

As with the insertion elements shown in Figure 4A, insertion element 11c of Figures 5A to 5D is an elongate bar which is moulded to the shape of the rear edge 4f of the body 4 and is inserted into a channel 8 between the body and a shroud 6.

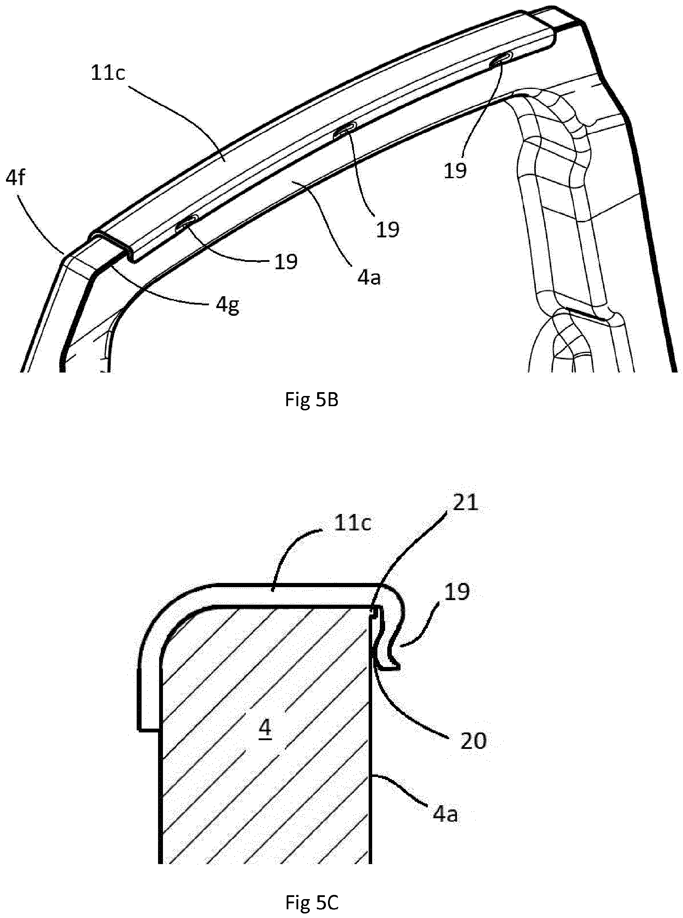

With particular reference to Figure 5B, insertion element 11c can also be shaped to clip over the front edge 4g of the body 4. In the example shown, the insertion element 11c has a number of indentations 19 which form protrusions 20 on the internal surface of the insertion element 11c and abut the front face 4a of the body, causing the insertion element 11c to deform slightly and thus grip the body 4. In this way, the insertion element 11c can be "push-fit" onto the body 4.

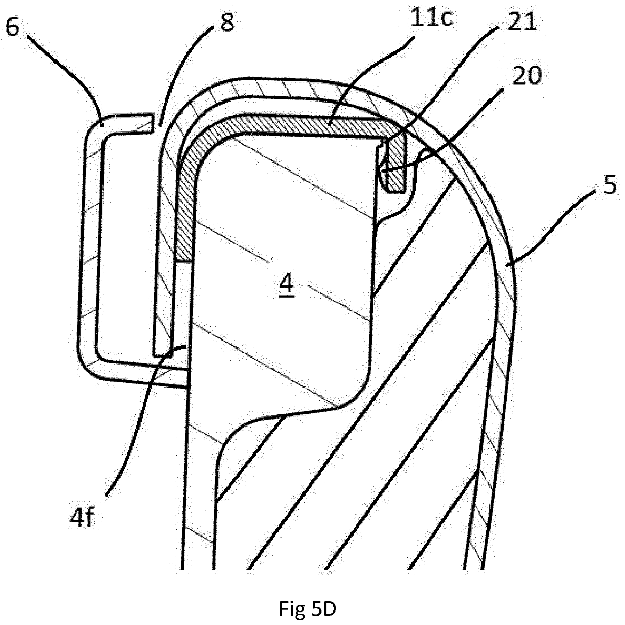

With reference to the cross-sectional views shown in Figures 5C and 5D, a ridge 21 is provided along the front edge 4g of the body 4. This helps to secure the insertion element 11c to the body 4 because removal of the insertion element 11c requires the protrusions 20 to pass over the ridge 21 thus requiring additional flexing of the insertion element 11c.

The present invention includes the following embodiments.
1. A seat part for a vehicle seat comprising a body and a cover for the body, wherein
   (i) the seat part comprises one or more securing means for securing part of the cover to the seat part;
   (ii) the seat part comprises one or more channels; and
   (iii) the cover comprises one or more insertion elements for insertion into the one or more channels,
   wherein the one or more insertion elements are moulded to the shape of the body such that when the one or more insertion elements are inserted into the one or more channels and a part of the cover is secured by the securing means to the seat part, removal of the cover from the body is substantially prevented.
2. A seat part according to embodiment 1, wherein the seat part is a seat back, preferably an aircraft seat back.
3. A seat part according to embodiment 1 or 2, wherein the one or more channels are positioned along at least a part of one or more sides, preferably two sides, of the seat part.
4. A seat part according to any preceding embodiment, wherein the one or more channels are positioned along at least a part of the top of the seat part.
5. A seat part according to any preceding embodiment, wherein the one or more channels are positioned along an edge of the body, preferably a rear edge of the body.
6. A seat part according to any preceding embodiment, wherein the one or more channels comprise a channel positioned along at least a part of a first side of the seat part, along the top of the seat part and along at least a part of a second side of the seat part.
7. A seat part according to any preceding embodiment, wherein the one or more channels are formed in the body and/or between the body of the seat part and a seat attachment secured to the body.
8. A seat part according to embodiment 7, wherein the seat attachment is a seat back attachment.
9. A seat part according to any preceding embodiment, wherein the one or more securing means are for securing part of the cover to the body.
10. A seat part according to any preceding embodiment, wherein the one or more securing means are for securing the cover to the seat part at or near one or more ends of one or more of the channels.
11. A seat part according to any preceding embodiment, wherein the seat part comprises two or more securing means for securing part of the cover to the body at first and second fixing positions, wherein the first and second fixing positions are positioned at or near the ends of one or more of the one or more channels.
12. A seat part according to embodiment 11, wherein the first fixing position is on a first side of the seat part and the second fixing position is on a second side of the seat part.
13. A seat part according to embodiment 11 or 12, wherein the first and second fixing positions are located between the front face of the body and the one or more channels.
14. A seat part according to any preceding embodiment, wherein the one or more securing means are located between the front face of the cover and the one or more insertion elements.
15. A seat part according to any preceding embodiment, wherein the one or more insertion elements comprise one or more side insertion elements for insertion into one or more channels positioned along a side of the seat part.
16. A seat part according to any preceding embodiment, wherein the one or more insertion elements comprise a first side insertion element for insertion into a channel along a first side of the seat part and a second side insertion element for insertion into a channel along a second side of the seat part.
17. A seat part according to any preceding embodiment, wherein the one or more insertion elements comprise one or more top insertion elements for insertion into a channel in the top of the seat part.
18. A seat part according to any preceding embodiment, wherein the cover comprises multiple insertion elements and a gap or joint is provided between adjacent insertion elements.
19. A seat part according to embodiment 18, wherein a gap or joint is provided at or near one or more corners of the seat part.
20. A seat part according to any preceding embodiment, wherein one or more of the one or more insertion elements are rigid insertion elements for insertion into the one or more channels.
21. A seat part according to any preceding embodiment, wherein one or more of the one or more insertion elements are shaped to be placed against and to bend around an edge of the body, preferably a rear edge of the body.
22. A seat part according to any preceding embodiment, wherein one or more of the one or more insertion elements are elongate insertion members, for example elongate bars, for positioning along an edge of the body, preferably a rear edge of the body.
23. A seat part according to any preceding embodiment, wherein one or more of the one or more insertion elements comprise a substantially L-shaped or U-shaped cross section.
24. A seat part according to any preceding embodiment, wherein one or more of the one or more insertion elements are shaped for positioning around a corner of the body, for example a top corner of the body.
25. A seat part according to any preceding embodiment, wherein the cover comprises a top insertion element moulded to the shape of the edge of the body along the top of the body and to the shape of one or both of the upper corners of the body.
26. A seat part according to any preceding embodiment, wherein the one or more insertion elements are an insertion element unit comprising two or more insertion elements, preferably three insertion elements.
27. A seat part according to any preceding embodiment, wherein the insertion elements are integrally formed.
28. A cover for a seat part, the cover comprising:-
   (a) one or more securing means for securing part of the cover to the seat part; and
   (b) one or more insertion elements for insertion into one or more channels of the seat part,
   wherein the one or more insertion elements are moulded to the shape of the body such that when the one or more insertion elements are inserted into the one or more channels and a part of the cover is secured by the securing means to the seat part, removal of the cover from the body is substantially prevented.
29. A seat comprising a seat part according to any of embodiments 1 to 27 and/or a cover according to embodiment 28.
30. A row of seats comprising one or more seats of embodiment 29.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A seat part for a vehicle seat comprising a body and a cover for the body, wherein
(i) the seat part comprises one or more securing means for securing part of the cover to the seat part;
(ii) the seat part comprises one or more channels; and
(iii) the cover comprises one or more insertion elements for insertion into the one or more channels,
wherein the one or more insertion elements are moulded to the shape of the body such that when the one or more insertion elements are inserted into the one or more channels and a part of the cover is secured by the securing means to the seat part, removal of the cover from the body is substantially prevented.

2. A seat part according to claim 1, wherein the seat part is a seat back, preferably an aircraft seat back.

3. A seat part according to claim 1 or 2, wherein the one or more channels are positioned along at least a part of one or more sides, preferably two sides, of the seat part.

4. A seat part according to any preceding claim, wherein the one or more channels are positioned along at least a part of the top of the seat part.

5. A seat part according to any preceding claim, wherein the one or more channels are positioned along an edge of the body, preferably a rear edge of the body.

6. A seat part according to any preceding claim, wherein the one or more channels are formed in the body and/or between the body of the seat part and a seat attachment secured to the body, optionally wherein the seat attachment is a seat back attachment.

7. A seat part according to any preceding claim, wherein the one or more securing means are for securing the cover to the seat part at or near one or more ends of one or more of the channels.

8. A seat part according to any preceding claim, wherein the seat part comprises two or more securing means for securing part of the cover to the body at first and second fixing positions, wherein the first and second fixing positions are positioned at or near the ends of one or more of the one or more channels.

9. A seat part according to claim 8, wherein the first fixing position is on a first side of the seat part and the second fixing position is on a second side of the seat part, and/or wherein the first and second fixing positions are located between the front face of the body and the one or more channels.

10. A seat part according to any preceding claim, wherein the one or more insertion elements comprise one or more top insertion elements for insertion into a channel in the top of the seat part.

11. A seat part according to any preceding claim, one or more of the one or more insertion elements are rigid insertion elements for insertion into the one or more channels, and/or wherein one or more of the one or more insertion elements are shaped to be placed against and to bend around an edge of the body, preferably a rear edge of the body.

12. A seat part according to any preceding claim, wherein one or more of the one or more insertion elements are elongate insertion members, for example elongate bars, for positioning along an edge of the body, preferably a rear edge of the body, optionally wherein one or more of the one or more insertion elements comprise a substantially L-shaped or U-shaped cross section.

13. A cover for a seat part, the cover comprising:-
(a) one or more securing means for securing part of the cover to the seat part; and
(b) one or more insertion elements for insertion into one or more channels of the seat part,
wherein the one or more insertion elements are moulded to the shape of the body such that when the one or more insertion elements are inserted into the one or more channels and a part of the cover is secured by the securing means to the seat part, removal of the cover from the body is substantially prevented.

14. A seat comprising a seat part according to any of claims 1 to 12 and/or a cover according to claim 13.

15. A row of seats comprising one or more seats of claim 14.
